# EUROPEAN PATENT APPLICATION

(11) **EP 4 832 180 A1**
(43) Date of publication of application: **28.10.2026**
(21) Application number: 25736196.4
(22) Date of filing: 02.01.2025
(51) Int. Cl.: H01M 50/131, H01M 50/586, H01M 50/627, H01M 50/593

(54) **BATTERY CELL, BATTERY AND ELECTRIC DEVICE**

(30) Priority: 02.01.2024 CN 202420012704 U
(71) Applicant: Contemporary Amperex Technology Co., Limited, Ningde, Fujian 352100 (CN)
(72) Inventor: NIU, Gang, Ningde, Fujian 352100 (CN); WANG, Weiwei, Ningde, Fujian 352100 (CN); LIN, Jiang, Ningde, Fujian 352100 (CN); LIN, Chuandong, Ningde, Fujian 352100 (CN); SUN, Qianao, Ningde, Fujian 352100 (CN)
(74) Representative: Ziebig Hengelhaupt Intellectual Property Attorneys Patentanwaltskanzlei PartGmbB
(86) International application number: PCT/CN2025/070218
(87) International publication number: WO 2025/146095

(57) **Abstract**

This application discloses a battery cell (12), a battery (100), and an electric device, and pertains to the field of battery technology. The battery cell (12) includes an electrode assembly (122) and a heat-shrinkable film (123). The electrode assembly (122) includes a main body (1221) and a tab (1222), where the main body (1221) has two end surfaces arranged oppositely arranged along a first direction (X) and a circumferential surface (12212) connecting the two end surfaces, and the tab (1222) is arranged on one of the end surfaces. The heat-shrinkable film (123) is wrapped around the circumferential surface (12212) along a circumferential direction of the main body (1221), where the heat-shrinkable film (123) has a leading end (1231) and a trailing end (1232) in the circumferential direction, and the leading end (1231) and the trailing end (1232) are connected. With the heat-shrinkable film (123) provided, the manufacturing efficiency of the battery cell (12) can be improved to a certain extent, so that the manufacturing efficiency of the battery (100) is improved.

## Description

### CROSS-REFERENCE TO RELATED APPLICATIONS

This application claims priority to Chinese Patent Application No. 202420012704.X filed on January 02, 2024 and entitled "BATTERY CELL, BATTERY, AND ELECTRIC DEVICE", which is incorporated herein by reference in its entirety.

### TECHNICAL FIELD

This application relates to the field of battery technology, and in particular to a battery cell, a battery, and an electric device.

### BACKGROUND

Energy conservation and emission reduction are key to the sustainable development of the automobile industry. Electric vehicles have become an important part of the sustainable development of the automobile industry due to their advantages of energy conservation and environmental protection. For electric vehicles, battery technology is an important factor affecting their development.

How to improve the manufacturing efficiency of batteries is an urgent problem to be solved in battery technology.

### SUMMARY

In view of the foregoing problem, this application provides a battery cell, a battery, and an electric device, so as to improve the manufacturing efficiency of batteries.

According to a first aspect, this application provides a battery cell. The battery cell includes an electrode assembly and a heat-shrinkable film. The electrode assembly includes a main body and a tab, where the main body has a first end surface and a second end surface oppositely arranged along a first direction and a circumferential surface connecting the first end surface and the second end surface, and the tab is arranged on the first end surface and/or the second end surface. The heat-shrinkable film is wrapped around the circumferential surface along the circumferential direction of the main body, where the heat-shrinkable film has a leading end and a trailing end in the circumferential direction, and the leading end and the trailing end are connected.

In the technical solution of the embodiments of this application, the electrode assembly is constrained and shaped by the principle of heat shrinkage of the heat-shrinkable film. This omits the hot pressing process and cold pressing process of the battery cell, which improves the manufacturing efficiency of the battery cell and reduces the manufacturing cost of the battery cell. In addition, the heat-shrinkable film can further be used to insulate and isolate the electrode assembly from the housing of the battery cell.

In one or more embodiments of the first aspect, the leading end and the trailing end are bonded by an adhesive.

In this solution, bonding the leading end and the trailing end of the heat-shrinkable film by an adhesive can reduce the manufacturing cost of the battery cell.

In one or more embodiments of the first aspect, in the first direction, the main body has a first edge and a second edge, a first gap is provided between the heat-shrinkable film and the first edge, and a second gap is provided between the heat-shrinkable film and the second edge.

In this solution, due to existence of the first gap and the second gap, the heat-shrinkable film does not cover the entire circumferential surface of the main body in the first direction. In this way, the heat-shrinkable film can increase the volumetric energy density of the battery cell while constraining the electrode assembly.

In one or more embodiments of the first aspect, in the first direction, the first gap and the second gap have the same size.

In this solution, equal sizing of the first gap and the second gap allows the constraining force applied on the electrode assemble to be substantially consistent, which helps improve the structural stability of the electrode assembly.

In one or more embodiments of the first aspect, the electrode assembly is a laminated electrode assembly.

In this solution, the laminated electrode assembly has small internal stress, and the heat-shrinkable film can properly constrain and shape the laminated electrode assembly.

In one or more embodiments of the first aspect, the circumferential surface has a first side face and a second side face oppositely arranged along a second direction and a third side face and a fourth side face oppositely arranged along a third direction, where the third direction is parallel to the laminating direction of the electrode assembly, an area of the third side face is larger than an area of the first side face, and the second direction, the first direction, and the third direction are perpendicular to each other. The leading end and the trailing end are connected to form a connecting portion, and the connecting portion is located on the first side face.

In this solution, when the connecting portion is arranged on the first side face, the third side face with a larger area has high flatness, which helps improve the volumetric energy density of the battery cell.

In one or more embodiments of the first aspect, in the third direction, a size of the connecting portion is L₁, a size of the heat-shrinkable film is L₂, 0.3≤L₁/L₂≤0.7 is satisfied.

In this solution, when L₁/L₂≥0.3, in the third direction, the ratio of the size of the connecting portion to the size of the heat-shrinkable film is large, the connection strength between the leading end and the trailing end is high, and the electrode assembly is not easily deformed after being constrained by the heat-shrinkable film. When L₁/L₂≤0.7, in the third direction, the ratio of the size of the connecting portion to the size of the heat-shrinkable film is small, the heat-shrinkable film occupies a small space inside the battery cell, and the volumetric energy density of the battery cell is high. Therefore, when 0.3≤L₁/L₂≤0.7, the leading end and the trailing end have high connection strength and the battery cell has a high energy density.

In one or more embodiments of the first aspect, a first hole is provided on a portion of the heat-shrinkable film covering the first side face.

In this solution, during electrolyte injection into the battery cell, the electrolyte can flow to the inside of the electrode assembly through the first hole. This accelerates the filling of the electrolyte inside the battery cell, which helps improve the electrolyte injection efficiency of the battery cell and the wetting effect of the electrolyte on the electrode assembly.

In one or more embodiments of the first aspect, a diameter of the first hole is D₁, and in the third direction, the size of the heat-shrinkable film is L₂, and 0.3≤D₁/L₂≤0.7 is satisfied.

In this solution, when D₁/L₂≥0.3, the ratio of the diameter of the first hole to the size of the heat-shrinkable film in the third direction is large, and the electrolyte injection efficiency of the battery cell is high. When D₁/L₂≤0.7, the ratio of the diameter of the first hole to the heat-shrinkable film in the third direction is small, the heat-shrinkable film has a high tensile strength, and the electrode assembly has a high structural stability after being constrained by the heat-shrinkable film. Therefore, when 0.3≤D₁/L₂≤0.7, the electrode assembly has a high structural stability while the battery cell has a high electrolyte injection efficiency.

In one or more embodiments of the first aspect, 3 mm≤D₁≤7 mm and 5 mm≤L₂≤15 mm.

In this solution, when D₁≥3 mm, the diameter of the first hole is large, and the electrolyte injection efficiency of the battery cell is high. When D₁≤7 mm, the diameter of the first hole is small, the heat-shrinkable film has a high tensile strength, and the structural stability of the electrode assembly is high. Therefore, when 3 mm≤D₁≤7 mm, the electrode assembly has a high structural stability while the battery cell has a high electrolyte injection efficiency. When L₂≥5 mm, the size of the heat-shrinkable film in the third direction is large, and the heat-shrinkable film can properly constrain the electrode assembly. When L₂≤15 mm, the size of the heat-shrinkable film in the third direction is small, and the energy density of the battery cell is high. Therefore, when 5 mm≤L₂≤15 mm, the battery cell has a high energy density while the electrode assembly is properly constrained.

In one or more embodiments of the first aspect, 4 mm≤D₁≤6 mm and 8 mm≤L₂≤12 mm.

In this solution, when D₁≥4 mm, the electrolyte injection efficiency of the battery cell can be further improved. When D₁≤6 mm, the structural stability of the electrode assembly can be further improved. Therefore, when 4 mm≤D₁≤6 mm, the structural stability of the electrode assembly can be further improved while the electrolyte injection efficiency of the battery cell is further improved. When L₂≥8 mm, the constraining effect of the heat-shrinkable film on the electrode assembly can be further improved. When L₂≤12 mm, the energy density of the battery cell can be further improved. Therefore, when 8 mm≤L₂≤12 mm, the energy density of the battery cell can be further improved and the constraining effect of the heat-shrinkable film on the electrode assembly is further improved.

In one or more embodiments of the first aspect, the first hole does not overlap the connecting portion.

In this solution, since the first hole does not overlap the connecting portion, the connecting portion does not block the first hole, which helps further improve the electrolyte injection efficiency of the battery cell.

In one or more embodiments of the first aspect, a plurality of the first holes are provided, and the plurality of first holes are arranged at intervals along the first direction.

In this solution, providing a plurality of first holes can further improve the electrolyte injection efficiency of the battery cell.

In one or more embodiments of the first aspect, a second hole is provided on a portion of the heat-shrinkable film covering the second side face.

In this solution, during electrolyte injection into the battery cell, the electrolyte can flow to the inside of the electrode assembly through the second hole. This accelerates the filling of the electrolyte inside the battery cell, which helps improve the electrolyte injection efficiency of the battery cell and the wetting effect of the electrolyte on the electrode assembly.

In one or more embodiments of the first aspect, a diameter of the second hole is D₂, in the third direction, the size of the heat-shrinkable film is L₂, 0.3≤D₂/L₂<1 is satisfied.

In this solution, when D₂/L₂≥0.3, the ratio of the diameter of the second hole to the size of the heat-shrinkable film in the third direction is large, and the electrolyte injection efficiency of the battery cell is high. When D₂/L₂<1, the ratio of the diameter of the second hole to the heat-shrinkable film in the third direction is small, the heat-shrinkable film has a high tensile strength, and the electrode assembly has a high structural stability after being constrained by the heat-shrinkable film. Therefore, when 0.3≤D₂/L₂<1, the electrode assembly has a high structural stability while the battery cell has a high electrolyte injection efficiency.

In one or more embodiments of the first aspect, 3 mm≤D₂<10 mm and 5 mm≤L₂≤15 mm.

In this solution, when D₂≥3 mm, the diameter of the second hole is large, and the electrolyte injection efficiency of the battery cell is high. When D₂<10 mm, the diameter of the second hole is small, and the structural stability of the electrode assembly is high. Therefore, when 3 mm≤D₂<10 mm, the electrode assembly has a high structural stability while the battery cell has a high electrolyte injection efficiency. When L₂≥5 mm, the size of the heat-shrinkable film in the third direction is large, and the heat-shrinkable film constrains the electrode assembly properly. When L₂≤15 mm, the size of the heat-shrinkable film in the third direction is small, and the energy density of the battery cell is high. Therefore, when 5 mm≤L₂≤15 mm, the battery cell has a high energy density while the electrode assembly is constrained properly.

In one or more embodiments of the first aspect, 4 mm≤D₂≤8 mm and 8 mm≤L₂≤12 mm.

In this solution, when D₂≥4 mm, the electrolyte injection efficiency of the battery cell can be further improved. When D₂≤8 mm, the structural stability of the electrode assembly can be further improved. Therefore, when 4 mm≤D₂≤8 mm, the structural stability of the electrode assembly can be further improved while the electrolyte injection efficiency of the battery cell is further improved. When L₂≥8 mm, the constraining effect of the heat-shrinkable film on the electrode assembly can be further improved. When L₂≤12 mm, the energy density of the battery cell can be further improved. Therefore, when 8 mm≤L₂≤12 mm, the energy density of the battery cell can be further improved and the constraining effect of the heat-shrinkable film on the electrode assembly is further improved.

In one or more embodiments of the first aspect, a plurality of the second holes are provided, and the plurality of second holes are arranged at intervals along the first direction.

In this solution, providing a plurality of second holes can further improve the electrolyte injection efficiency of the battery cell.

In one or more embodiments of the first aspect, the battery cell further includes a first adhesive tape and a second adhesive tape, and along the circumferential direction of the main body, the first adhesive tape and the second adhesive tape are both arranged around the main body. The heat-shrinkable film has a first end and a second end in the first direction, the first adhesive tape is configured to fix the first end to the main body, and the second adhesive tape is configured to fix the second end to the main body.

In this solution, the first adhesive tape and the second adhesive tape respectively fix the first end and the second end to the main body, thereby reducing the risk of exposure of the electrode assembly caused by another shrinkage of the heat-shrinkable film in the subsequent drying process. This helps improve the reliability of the battery cell.

In one or more embodiments of the first aspect, an outer edge of the first adhesive tape is flush with the first end surface, and an outer edge of the second adhesive tape is flush with the second end surface.

In this solution, since the outer edge of the first adhesive tape does not extend beyond the first end surface and the outer surface of the second adhesive tape does not extend beyond the second end surface, the first adhesive tape is less likely to shield the first end surface and the second adhesive tape is less likely to shield the second end surface. This reduces the risk of deteriorating the electrolyte injection efficiency of the battery cell and wetting effect of the electrode assembly.

In one or more embodiments of the first aspect, the tab includes a positive tab and a negative tab, and the positive tab and the negative tab are both arranged on the first end surface.

In this solution, the positive tab and the negative tab are located on the same side of the electrode assembly, which helps improve the energy density of the battery cell in one direction.

According to a second aspect, this application provides a battery, including the battery cell according to one or more of the foregoing embodiments.

In this solution, the battery cell in one or more of the foregoing embodiments is manufactured with high manufacturing efficiency and low cost. This means that a battery including the battery cell can also be manufactured with high manufacturing efficiency and low cost.

According to a third aspect, this application provides an electric device. The electric device includes the battery cell according to one or more of the foregoing embodiments, and the battery cell is configured to provide electric energy; or the electric device includes the battery according to one or more of the foregoing embodiments, and the battery is configured to provide electric energy.

In this solution, the battery cell or battery in one or more of the foregoing embodiments is manufactured with high manufacturing efficiency and low cost. This means that a battery including the battery cell or battery can also be manufactured with high manufacturing efficiency and low cost.

The foregoing description is merely an overview of the technical solutions of this application. To provide a clearer understanding of the technical means of this application and enable implementation thereof according to the specification, and to make other objectives, features, and advantages of this application more apparent, specific embodiments of this application are described below.

### BRIEF DESCRIPTION OF DRAWINGS

Various other advantages and benefits will be apparent to those of ordinary skill in the art upon reading the following detailed description of the preferred embodiments. The accompanying drawings are provided merely for the purpose of illustrating the preferred embodiments and are not intended to limit this application. Throughout the accompanying drawings, same components are represented by same reference signs. In the accompanying drawings:
FIG. 1 is a schematic structural diagram of a vehicle according to some embodiments of this application;
FIG. 2 is an exploded view of a battery according to some embodiments of this application;
FIG. 3 is a cross-sectional view of a battery cell according to some embodiments of this application;
FIG. 4 is an isometric view of a partial structure of a battery cell according to some embodiments of this application, showing an unfolded heat-shrinkable film;
FIG. 5 is a schematic structural diagram of an electrode assembly according to some embodiments of this application;
FIG. 6 is an isometric view of a partial structure of a battery cell according to some embodiments of this application;
FIG. 7 is an enlarged view of position B in FIG. 6;
FIG. 8 is a schematic structural diagram of a battery cell according to some embodiments of this application, showing a first hole;
FIG. 9 is a schematic structural diagram of a battery cell according to some embodiments of this application, showing a second hole; and
FIG. 10 is an isometric view of a partial structure of a battery cell according to other embodiments of this application.

The reference signs in specific embodiments are as follows:
1000: vehicle; 200: controller; 300: motor; 100: battery; 11: box; 111: first part; 112: second part; 12: battery cell; 121: housing; 1211: end cap; 1212: housing body; 122: electrode assembly; 1221: main body; 12211a: first end surface; 12211b: second end surface; 12212: circumferential surface; 12212a: first side face; 12212b: second side face; 12212c: third side face; 12212d: fourth side face; 12213: first edge; 12214: second edge; 1222: tab; 1222a: positive tab; 1222b: negative tab; 123: heat-shrinkable film; 1231: leading end; 1232: trailing end; 1233: connecting portion; 1234: first hole; 1235: second hole; 1236: first end; 1237: second end; 124: adapting sheet; 125: electrode terminal; 126a: first gap; 126b: second gap; 127: first adhesive tape; 128: second adhesive tape; X: first direction; Y: second direction; and Z: third direction.

### DESCRIPTION OF EMBODIMENTS

The embodiments of the technical solutions of this application will be described in detail below with reference to the accompanying drawings. The following embodiments are only used to more clearly illustrate the technical solutions of this application, and are therefore only used as examples and not intended to limit the protection scope of this application.

Unless otherwise defined, all technical and scientific terms used herein have the same meaning as those generally understood by those skilled in the technical field to which this application belongs. The terms used herein are only for the purpose of describing specific embodiments and are not intended to limit this application. The terms "comprise" and "have" and any variations thereof in the description and claims of this application and the foregoing accompanying drawings are intended to cover non-exclusive inclusion.

In the description of the embodiments of this application, the technical terms "first", "second", and the like are only used to distinguish different objects, and cannot be understood as indicating or implying relative importance or implicitly indicating the quantity, specific order, or primary-secondary relationship of the indicated technical features. In the description of the embodiments of this application, "a plurality of" means two or more, unless otherwise clearly and specifically limited.

The reference to an "embodiment" herein means that a specific feature, structure, or characteristic described in conjunction with the embodiment may be included in at least one embodiment of this application. The appearance of this phrase in various positions in the description does not necessarily refer to the same embodiment, nor is it an independent or alternative embodiment that is mutually exclusive with other embodiments. It is explicitly and implicitly understood by those skilled in the art that the embodiments described herein may be combined with other embodiments.

In the description of the embodiments of this application, the term "a plurality of" refers to two or more (including two), and similarly, "a plurality of groups" refers to two or more groups (including two groups), and "a plurality of pieces" refers to two or more pieces (including two pieces).

In the description of the embodiments of this application, the orientation or positional relationship indicated by the technical terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like are based on the orientation or positional relationship shown in the accompanying drawings, and are only for the convenience of describing the embodiments of this application and simplifying the description, and do not indicate or imply that the apparatus or element referred to must have a specific orientation, be constructed and operated in a specific orientation, and therefore cannot be understood as a limitation on the embodiments of this application.

In the description of the embodiments of this application, unless otherwise clearly specified and limited, the technical terms "mount", "connect", "link", "fix", and the like should be understood in a broad sense, for example, it may be a fixed connection, a detachable connection, or an integral connection; it may be a mechanical connection or an electrical connection; it may be a direct connection or an indirect connection through an intermediate medium, and it may be the internal communication of two elements or the interaction relationship between two elements. For those of ordinary skill in the art, the specific meanings of the foregoing terms in the embodiments of this application can be understood according to specific circumstances.

In this application, the battery cell may include but is not limited to a lithium-ion secondary battery, a lithium-ion primary battery, a lithium sulfur battery, a sodium lithium-ion battery, a sodium-ion battery, or a magnesium-ion battery. The shape of the battery cell may include but is not limited to cylinder, flat shape, rectangle, or other shapes. Based on the packaging method, the battery cell may include but is not limited to a cylindrical battery cell, a prismatic battery cell, a pouch battery cell, and a blade battery cell.

In some high-power applications such as electric vehicles, batteries are applied at three levels: battery cell, battery module, and battery. The battery module is formed by electrically connecting a certain quantity of battery cells and placing them in a frame to protect the battery cells from external impact, heat, vibration, and the like. The battery refers to the final state of the battery system mounted in the electric vehicle. The battery mentioned in the embodiments of this application refers to a single physical module including one or more battery cells to provide higher voltage and capacity. The battery generally includes a box for accommodating one or more battery cells. The box can reduce the risk that liquid or other foreign objects affect the charging or discharging of the battery cells.

The following will mainly focus on rectangular battery cells. It should be understood that the embodiments described below are also applicable to cylindrical battery cells, pouch battery cells, or blade battery cells in some aspects.

In a typical battery cell structure, the battery cell includes a housing, an electrode assembly, and an electrolyte. The housing may include an end cap and a housing body, and the end cap closes the opening of the housing body to define a accommodating space for accommodating the electrode assembly.

The electrode assembly is accommodated in the accommodating space. The electrode assembly includes a positive electrode plate, a negative electrode plate, and a separator. The battery cell mainly works through the movement of metal ions between the positive electrode plate and the negative electrode plate. The positive electrode plate includes a positive current collector and a positive active material layer. The positive active material layer is applied on the surface of the positive current collector. The positive current collector not coated with the positive active material layer protrudes from the positive current collector coated with the positive active material layer. The positive current collector not coated with the positive active material layer serves as a positive tab. Taking a lithium-ion battery as an example, the material of the positive current collector may be aluminum, and the positive active material may be lithium cobalt oxide, lithium iron phosphate, ternary lithium, lithium manganese oxide, or the like. The negative electrode plate includes a negative current collector and a negative active material layer. The negative active material layer is applied on the surface of the negative current collector. The negative current collector not coated with the negative active material layer protrudes from the negative current collector coated with the negative active material layer. The negative current collector not coated with the negative active material layer serves as a negative tab. The material of the negative current collector may be copper, and the negative active material may be carbon, silicon, or the like. To allow a large current to pass without fusing, a plurality of positive tabs are provided and stacked, and a plurality of negative tabs are provided and stacked. In addition, the electrode assembly may be formed by winding, lamination, or other means. For example, the lamination process is a process of stacking the positive electrode plate, the negative electrode plate, and the separator to form an electrode assembly.

To reduce the risk of the electrode assembly, to be placed in the housing, being scratched by the housing body and to insulate the electrode assembly from the wall of the housing body, the outer surface of the electrode assembly is generally covered with an insulating film. The insulating film is generally soft and flexible. One insulating film can cover one or more electrode assemblies. For example, when a plurality of electrode assemblies are accommodated in the accommodating space, one insulating film may cover the plurality of electrode assemblies.

The tab generally leads out the electric energy of the electrode assembly by being electrically connected to a conductive member. In some cases, the conductive member is an adapting sheet connecting the tab and an electrode terminal. In some other cases, the conductive member is the electrode terminal.

The electrode terminal generally includes a positive electrode terminal and a negative electrode terminal. For a rectangular battery cell, the electrode terminal is generally arranged on the end cap portion. In some other cases, the electrode terminal may further be arranged on the housing body portion. A plurality of battery cells are connected in series and/or in parallel via the electrode terminals and used in various applications.

Multiple design factors need to be considered at the same time in the development of battery technology, including performance parameters such as reliability, cycle life, discharge capacity, charge-discharge rate, and energy density of the battery, as well as the manufacturing efficiency of the battery.

After winding or lamination, the electrode assembly needs to undergo shaping, drying, and other processes before being placed into the housing. A typical electrode assembly needs to undergo at least one rolling process, hot pressing process, cold pressing process, and drying before it is placed into the housing. The battery production process has many steps, presenting low efficiency and high cost.

In view of this, this application provides a battery cell with a laminated electrode assembly. The battery cell includes an electrode assembly and a heat-shrinkable film. The electrode assembly includes a main body and a tab. The main body has two end surfaces oppositely arranged along a first direction and a circumferential surface connecting the two end surfaces. The tab is arranged on the end surface. The heat-shrinkable film is wrapped around the circumferential surface along the circumferential direction of the main body. The heat-shrinkable film has a leading end and a trailing end in the circumferential direction. The leading end and the trailing end are connected. By constraining and shaping the electrode assembly through the principle of heat shrinkage of the heat-shrinkable film, the manufacturing efficiency of the battery cell can be improved and the manufacturing cost of the battery cell can be reduced.

The technical solutions described in the embodiments of this application are applicable to battery cells, batteries, and electric devices using batteries.

An electric device includes but is not limited to an electric bicycle, an electric vehicle, a ship, a spacecraft, or the like. For example, the spacecraft includes an airplane, a rocket, a space shuttle, a spaceship, or the like.

For the convenience of description, the following embodiments are described by assuming that the electric device according to an embodiment of this application is a vehicle.

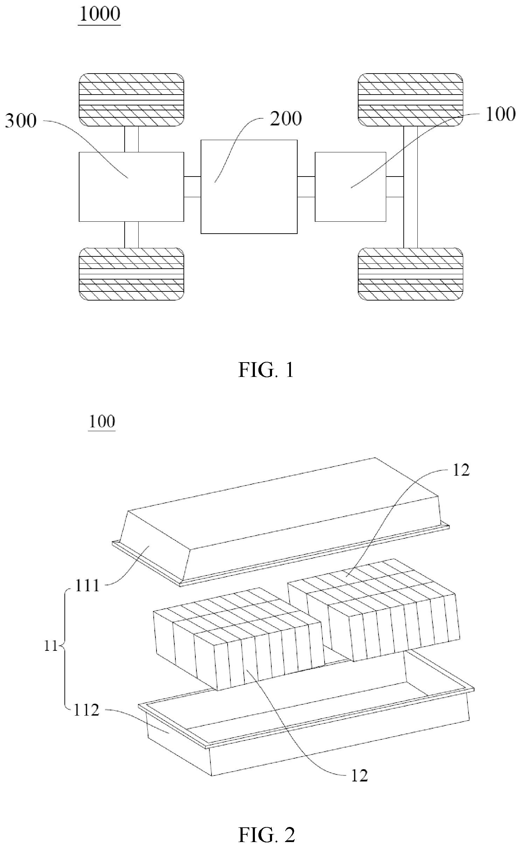

For example, FIG. 1 is a schematic structural diagram of a vehicle 1000 according to some embodiments of this application. The vehicle 1000 may be a fuel vehicle, a gas vehicle, or a new energy vehicle. The new energy vehicle may be a pure electric vehicle, a hybrid vehicle, an extended-range vehicle, or the like. A motor 300, a controller 200, and a battery 100 may be arranged inside the vehicle 1000. The controller 200 is configured to control the battery 100 to supply power to the motor 300. For example, the battery 100 may be arranged at the bottom, front, or rear of the vehicle 1000. The battery 100 may be configured to supply power to the vehicle 1000. For example, the battery 100 may be used as an operating power source for the circuit system of the vehicle 1000, for example, for satisfying the starting, navigation, and operating power requirements of the vehicle 1000 during operation. In another embodiment of this application, the battery 100 may not only be used as an operating power source for the vehicle 1000, but also as a driving power source for the vehicle 1000, replacing or partially replacing fuel oil or natural gas to provide driving force for the vehicle 1000.

To meet different power requirements, the battery 100 may include a plurality of battery cells 12, where the plurality of battery cells 12 may be connected in series, parallel, or series-parallel. The series-parallel connection refers to a combination of series connection and parallel connections. The battery 100 may also be called a battery pack. Optionally, the plurality of battery cells 12 may be connected series, parallel, or series-parallel to form a battery module, and then the plurality of battery modules may be connected in series, parallel, or series-parallel to form the battery 100. That is, the plurality of battery cells 12 may directly form the battery 100, or may form battery modules and then the battery modules form the battery 100.

For example, referring to FIG. 2, FIG. 2 is an exploded view of a battery 100 according to some embodiments of this application. The battery 100 may include a plurality of battery cells 12. The battery 100 may further include a box 11. The interior of the box 11 is a hollow structure, and the plurality of battery cells 12 are accommodated in the box 11. As shown in FIG. 2, a first part 111 and a second part 112 are involved. The first part 111 and the second part 112 are fastened together. The shapes of the first part 111 and the second part 112 may be determined according to the shape of the combination of the plurality of battery cells 12. The first part 111 and the second part 112 may each have an opening. For example, the first part 111 and the second part 112 may each be a hollow cuboid having only one open side. The opening of the first part 111 and the opening of the second part 112 are arranged opposite to each other, and the first part 111 and the second part 112 are fastened to each other to form a box 11 with a closed chamber. The plurality of battery cells 12 are connected in parallel, series, or series-parallel, and then placed in the box 11 formed by fastening the first part 111 and the second part 112.

Optionally, the battery 100 may further include other structures, which are not described in detail herein. For example, the battery may further include a busbar, which is configured to achieve electrical connection between the plurality of battery cells 12, for example, parallel connection, series connection, or series-parallel connection. Specifically, the busbar can achieve electrical connection between the battery cells 12 by connecting the electrode terminals 125 of the battery cells 12. Further, the busbar may be fixed to the electrode terminals 125 of the battery cells 12 by welding. The electric energy of the plurality of battery cells 12 can be further led out of the box 11 through a conductive mechanism.

According to different power requirements, the quantity of battery cells 12 can be arbitrary. The plurality of battery cells 12 may be connected in series, parallel, or series-parallel to achieve higher capacity or power. Since a large quantity of battery cells 12 may be included in each battery 100, for the convenience of mounting, the battery cells 12 may be grouped, and each group of battery cells 12 forms a battery module. The quantity of battery cells 12 included in the battery module is not limited and may be specified according to needs. The battery 100 may include a plurality of battery modules, and these battery modules may be connected in series, parallel, or series-parallel.

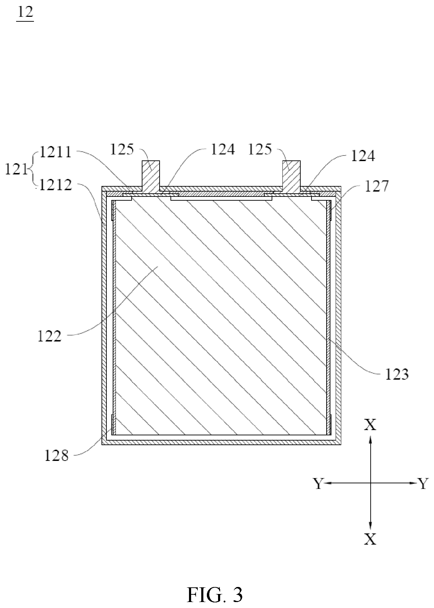

Referring to FIG. 3, the battery cell 12 includes one or more electrode assemblies 122 and a housing 121. The housing 121 may include a housing body 1212. A plurality of walls of the housing body 1212, that is, a plurality of walls of the housing 121, enclose a chamber, which can be used to accommodate the electrode assembly 122. The housing body 1212 is determined according to the shape of the combination of one or more electrode assemblies 122. For example, the housing body 1212 may be a hollow cuboid, cube, or regular polyhedron, and an opening is provided on one side of the housing body 1212 so that one or more electrode assemblies 122 can be placed in the housing body 1212. The housing body 1212 is filled with an electrolytic salt, for example, an electrolyte. In some embodiments, the battery cell 12 may further include an insulating film, which is used to wrap the electrode assembly 122. One insulating film may cover one or more electrode assemblies 122. For example, when a plurality of electrode assemblies 122 are accommodated in the accommodating space, one insulating film can cover the plurality of electrode assemblies 122. In some cases, the insulating film may further be referred to as a protective film. In other embodiments, the heat-shrinkable film 123 for constraining the electrode assembly 122 may also be used as an insulating film.

The battery cell 12 may further include two electrode terminals 125, and the two electrode terminals 125 may be arranged on the end cap 1211. The end cap 1211 is generally in a flat plate shape. The two electrode terminals 125 are fixed on the flat surface of the end cap 1211. The two electrode terminals 125 serve as a positive electrode terminal 125 and a negative electrode terminal 125 respectively. Each electrode terminal 125 is provided with an adapting sheet 124, which is located between the end cap 1211 and the electrode assembly 122 and is configured to electrically connect the electrode assembly 122 and the electrode terminal 125. In the battery cell 12, according to actual needs, one or more electrode assembly 122 may be provided. A plurality of independent electrode assemblies 122 are arranged in the battery cell 12.

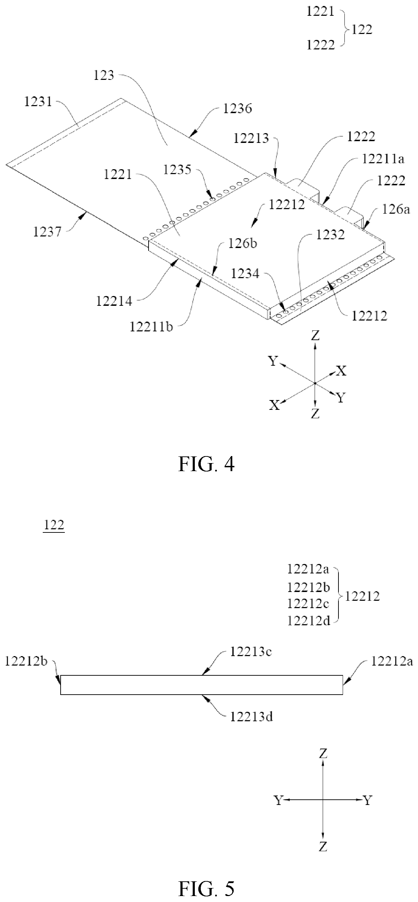

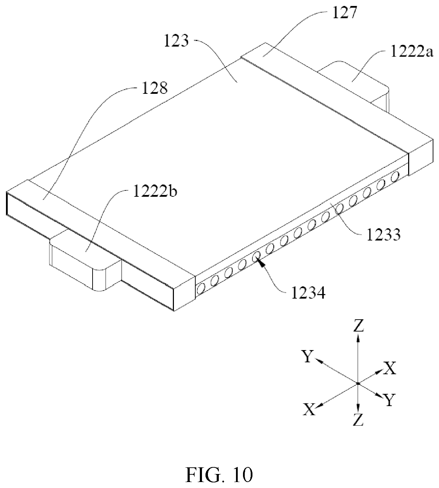

According to some embodiments of this application, referring to FIG. 4 to FIG. 7 and FIG. 10, the battery cell 12 includes an electrode assembly 122 and a heat-shrinkable film 123. The electrode assembly 122 includes a main body 1221 and a tab 1222. The main body 1221 has a first end surface 12211a and a second end surface 12211b oppositely arranged along a first direction X, and a circumferential surface 12212 connecting the first end surface 12211a and the second end surface 12211b. The tab 1222 is arranged on the first end surface 12211a and/or the second end surface 12211b. The heat-shrinkable film 123 is wrapped around the circumferential surface 12212 along the circumferential direction of the main body 1221. The heat-shrinkable film 123 has a leading end 1231 and a trailing end 1232 in the circumferential direction. The leading end 1231 and the trailing end 1232 are connected.

The first direction X is a direction in which the tab 1222 extends out of the main body 1221.

In some embodiments, the tab 1222 includes a positive tab 1222a and a negative tab 1222b. The positive tab 1222a is arranged on the first end surface 12211a, and the negative tab 1222b is arranged on the second end surface 12211b. In other embodiments, the negative tab 1222b is arranged on the first end surface 12211a, and the positive tab 1222a is arranged on the second end surface 12211b.

The electrode assembly 122 may include but is not limited to a wound electrode assembly or a laminated electrode assembly.

The electrode assembly 122 includes at least one positive electrode plate, at least one separator, and at least one negative electrode plate. The positive electrode plates and the negative electrode plates are alternately stacked along one direction. One separator is arranged between a positive electrode plate and a negative electrode plate adjacent thereto to form the electrode assembly 122. When the electrode assembly 122 includes a plurality of positive electrode plates and a plurality of negative electrode plates, the quantity of positive electrode plates and the quantity of negative electrode plates may be the same or different. For example, in some embodiments, referring to FIG. 4, the positive electrode plates and the negative electrode plates are stacked along a third direction Z.

The portions of the positive electrode plate and the negative electrode plate having active materials and the separator constitute the main body 1221. The portions of the positive electrode plate and the negative electrode plate not having active materials each constitute the tab 1222.

Referring to FIG. 5, the circumferential surface 12212 can be regarded as a surface where the first side face 12212a, the third side face 12212c, the second side face 12212b, and the fourth side face 12212d are connected in sequence.

The heat-shrinkable film 123 refers to a film that can be preheated and shrunk. The material of the heat-shrinkable film 123 includes but is not limited to polyethylene (PE), polypropylene (PP), polyester (PVC), polyolefin shrink film (POF), or the like.

The heat-shrinkable film 123 may be a long strip-shaped film. Referring to FIG. 4, when the heat-shrinkable film 123 is unfolded, one end in the second direction Y is the leading end 1231, and the other end in the second direction Y is the trailing end 1232.

After being wrapped around the circumferential surface 12212, the leading end 1231 and the trailing end 1232 may be connected by an adhesive, adhesive tape, or the like.

The leading end 1231 and the trailing end 1232 may be connected to any surface of the main body 1221.

The heat-shrinkable film 123 may be wrapped around the circumferential surface 12212 along the circumferential direction of the main body 1221. Wrapping the heat-shrinkable film 123 around the circumferential surface 12212 can reduce the gap between the heat-shrinkable film 123 and the main body 1221, which allows the electrode assembly 122 to be constrained more tightly, and reduce the risk of the electrode assembly 122 being loosened. This improves the structural stability of the electrode assembly 122. In addition, after being wrapped around the circumferential surface 12212, the heat-shrinkable film 123 can provide a certain degree of insulation and therefore can replace the traditional insulating film used for insulating the electrode assembly 122 from the housing body 1212 to a certain extent.

In this technical solution of the embodiments of this application, the electrode assembly 122 is constrained and shaped by the principle of heat shrinkage of the heat-shrinkable film 123. On the one hand, this omits the hot pressing process and cold pressing process of the battery cell 12, improves the manufacturing efficiency of the battery cell 12, and reduces the manufacturing cost of the battery cell 12. On the other hand, the heat-shrinkable film 123 can further be used to insulate and isolate the electrode assembly 122 from the housing 121 of the battery cell 12.

According to some embodiments of this application, the leading end 1231 and the trailing end 1232 are bonded by an adhesive.

The adhesive may be formed by applying glue on the leading end 1231 and/or the trailing end 1232.

In this solution, bonding the leading end 1231 and the trailing end 1232 of the heat-shrinkable film 123 by an adhesive can reduce the manufacturing cost of the battery cell 12.

According to some embodiments of this application, referring to FIG. 4 to FIG. 7, in the first direction X, the main body 1221 has a first edge 12213 and a second edge 12214. A first gap 126a is provided between the heat-shrinkable film 123 and the first edge 12213, and a second gap 126b is provided between the heat-shrinkable film 123 and the second edge 12214.

The first gap 126a is provided between the heat-shrinkable film 123 and the first edge 12213, and the second gap 126b is provided between the heat-shrinkable film 123 and the second edge 12214. This means that the heat-shrinkable film 123 does not cover the entire circumferential surface 12212.

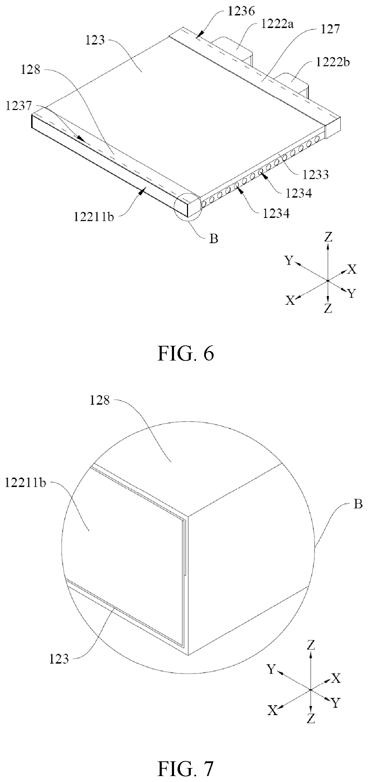

In some embodiments, referring to FIG. 7, the battery cell 12 further includes a first adhesive tape 127 and a second adhesive tape 128, and along the circumferential direction of the main body 1221, the first adhesive tape 127 and the second adhesive tape 128 are both arranged around the main body 1221. The heat-shrinkable film 123 has a first end 1236 and a second end 1237 in the first direction X. In the first direction X, one end of the first adhesive tape 127 is bonded to the first gap 126a, and the other end of the first adhesive tape 127 is bonded to the heat-shrinkable film 123 to fix the first end 1236. In the first direction X, one end of the second adhesive tape 128 is bonded to the second gap 126b, and the other end of the second adhesive tape 128 is bonded to the heat-shrinkable film 123 to fix the second end 1237.

In this solution, due to existence of the first gap 126a and the second gap 126b, the heat-shrinkable film 123 does not cover the entire circumferential surface 12212 of the main body 1221 in the first direction X. In this way, while the heat-shrinkable film 123 can increase the volumetric energy density of the battery cell 12 while constraining the electrode assembly 122.

According to some embodiments of this application, referring to FIG. 4 to FIG. 7, in the first direction X, the first gap 126a and the second gap 126b have the same size.

In the first direction X, the first gap 126a and the second gap 126b have the same size. This means that the first gap 126a and the second gap 126b are arranged symmetrically with respect to the center line of the main body 1221 in the first direction X.

In this solution, equal sizing of the first gap 126a and the second gap 126b allows the constraining force applied on the electrode assembly 122 to be substantially consistent, which helps improve the structural stability of the electrode assembly 122.

According to some embodiments of this application, the electrode assembly 122 is a laminated electrode assembly.

The laminating direction of the positive electrode plate and the negative electrode plate of the electrode assembly 122 is the third direction Z.

In this solution, the laminated electrode assembly has small internal stress, and the heat-shrinkable film 123 can properly constrain and shape the laminated electrode assembly.

According to some embodiments of this application, referring to FIG. 4 to FIG. 7, the circumferential surface 12212 has a first side face 12212a and a second side face 12212b oppositely arranged along a second direction Y and a third side face 12212c and a fourth side face 12212d oppositely arranged along a third direction Z, where the third direction Z is parallel to the laminating direction of the electrode assembly 122, an area of the third side face 12212c is larger than an area of the first side face 12212a, and the second direction Y, the first direction X, and the third direction Z are perpendicular to each other. The leading end 1231 and the trailing end 1232 are connected to form a connecting portion 1233, and the connecting portion 1233 is located on the first side face 12212a.

In some embodiments, the areas of the third side face 12212c and the fourth side face 12212d are equal, and the areas of the first side face 12212a and the second side face 12212b are equal. In other embodiments, the third side face 12212c and the fourth side face 12212d are the faces with the largest area of the electrode assembly 122.

In some embodiments, when the leading end 1231 and the trailing end 1232 are connected to form the connecting portion 1233, the leading end 1231 and the trailing end 1232 overlap on the first side face 12212a, and then an adhesive is applied on the overlapping portion of the leading end 1231 and the trailing end 1232 to bond the leading end 1231 and the trailing end 1232.

In this solution, when the connecting portion 1233 is arranged on the first side face 12212a, the third side face 12212c with a larger area has high flatness, which helps improve the volumetric energy density of the battery cell 12.

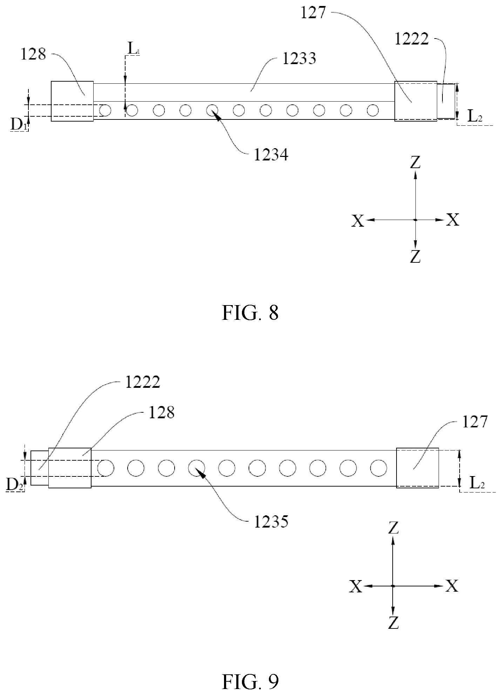

According to some embodiments of this application, referring to FIG. 4 and FIG. 8, in the third direction Z, a size of the connecting portion 1233 is L₁, a size of the heat-shrinkable film 123 is L₂, and 0.3≤L₁/L₂≤0.7 is satisfied.

Both the size of the connecting portion 1233 and the size of the heat-shrinkable film 123 are equal to the size of the heat-shrinkable film 123 that has shrunk when heated. In some embodiments, the size of the connecting portion 1233 may be the size of the overlapping portion of the leading end 1231 and the trailing end 1232 in the third direction Z. In other embodiments, the size of the connecting portion 1233 may be the size of the adhesive tape used to bond the leading end 1231 and the trailing end 1232 in the third direction Z.

The size of the heat-shrinkable film 123 is the average distance between the upper surface and the lower surface of the heat-shrinkable film 123 in the third direction Z after heat shrinkage.

L₁/L₂ may be any value greater than or equal to 0.3 and less than or equal to 0.7, for example, 0.3, 0.35, 0.4, 0.45, 0.5, 0.55, 0.6, 0.65, or 0.7.

In this solution, when L₁/L₂≥0.3, in the third direction Z, the ratio of the size of the connecting portion 1233 to the size of the heat-shrinkable film 123 is large, the connection strength between the leading end 1231 and the trailing end 1232 is high, and the electrode assembly 122 is not easily deformed after being constrained by the heat-shrinkable film 123. When L₁/L₂≤0.7, in the third direction Z, the ratio of the size of the connecting portion 1233 to the size of the heat-shrinkable film 123 is small, the heat-shrinkable film 123 occupies a small space inside the battery cell 12, and the volumetric energy density of the battery cell 12 is high. Therefore, when 0.3≤L₁/L₂≤0.7, the leading end 1231 and the trailing end 1232 have high connection strength and the battery cell 12 has a high energy density.

According to some embodiments of this application, referring to FIG. 4, FIG. 6 and FIG. 8, a first hole 1234 is provided on a portion of the heat-shrinkable film 123 covering the first side face 12212a.

The shape of the first hole 1234 may include but is not limited to circle, semicircle, polygonal, or the like.

The first hole 1234 may be pre-processed before the heat-shrinkable film 123 covers the electrode assembly 122.

Apertures of the first hole 1234 may be the same or different.

The first hole 1234 may be arranged in one or multiple rows. Each row may have one or more first holes 1234. In embodiments where a plurality of first holes 1234 are provided, the plurality of first holes 1234 may be arranged linearly, in a wave-shaped pattern, or in an irregular pattern.

The first side face 12212a and the second side face 12212b are oppositely arranged along the second direction Y. The third direction Z is parallel to the laminating direction of the electrode assembly 122. The second direction Y, the first direction X, and the third direction Z are perpendicular to each other. This means that there is an inter-layer gap in the first side face 12212a of the electrode assembly 122. During electrolyte injection into the battery cell 12, the electrolyte can not only enter the inside of the electrode assembly 122 from the tab 1222, but also enter the inside of the electrode assembly 122 through the first hole 1234 and the inter-layer gap, which helps improve the electrolyte injection efficiency of the battery cell 12.

In this solution, during electrolyte injection into the battery cell 12, the electrolyte can flow to the inside of the electrode assembly 122 through the first hole 1234. This accelerates the filling of the electrolyte inside the battery cell 12, which helps improve the electrolyte injection efficiency of the battery cell 12 and the wetting effect of the electrolyte on the electrode assembly 122.

According to some embodiments of this application, referring to FIG. 4, FIG. 6 and FIG. 8, a diameter of the first hole 1234 is D₁, and in the third direction Z, the size of the heat-shrinkable film 123 is L₂, and 0.3≤D₁/L₂≤0.7 is satisfied.

The diameter of the first hole 1234 can be understood as the diameter of the circumscribed circle of the first hole 1234, that is, the diameter of the first hole 1234 is the diameter of the smallest circle capable of surrounding the first hole 1234. For example, in the embodiment where the first hole 1234 is a square hole, the diameter of the first hole 1234 is the length of the diagonal of the square hole.

D₁/L₂ may be any value greater than or equal to 0.3 and less than or equal to 0.7, for example, 0.3, 0.35, 0.4, 0.45, 0.5, 0.55, 0.6, 0.65, or 0.7.

In this solution, when D₁/L₂≥0.3, the ratio of the diameter of the first hole 1234 to the size of the heat-shrinkable film 123 in the third direction Z is large, and the electrolyte injection efficiency of the battery cell 12 is high. When D₁/L₂≤0.7, the ratio of the diameter of the first hole 1234 to the heat-shrinkable film 123 in the third direction Z is small, the heat-shrinkable film 123 has a high tensile strength, and the electrode assembly 122 has a high structural stability after being constrained by the heat-shrinkable film 123. Therefore, when 0.3≤D₁/L₂≤0.7, the electrode assembly 122 has a high structural stability while the battery cell 12 has a high electrolyte injection efficiency.

According to some embodiments of this application, referring to FIG. 4, FIG. 6, and FIG. 8, 3 mm≤D₁≤7 mm and 5 mm≤L₂≤15 mm.

D₁ may be any value greater than or equal to 3 mm and less than or equal to 7 mm, for example, 3 mm, 3.5 mm, 4 mm, 4.5 mm, 5 mm, 5.5 mm, 6 mm, 6.5 mm, or 7 mm.

L₂ may be any value greater than or equal to 5 mm and less than or equal to 15 mm, for example, 5 mm, 5.5 mm, 6 mm, 6.5 mm, 7 mm, 7.5 mm, 8 mm, 8.5 mm, 9 mm, 9.5 mm, 10 mm, 10.5 mm, 11 mm, 11.5 mm, 12 mm, 12.5 mm, 13 mm, 13.5 mm, 14 mm, 14.5 mm, or 15 mm.

In this solution, when D₁≥3 mm, the diameter of the first hole 1234 is large, and the electrolyte injection efficiency of the battery cell 12 is high. When D₁≤7 mm, the diameter of the first hole 1234 is small, the heat-shrinkable film 123 has a high tensile strength, and the structural stability of the electrode assembly 122 is high. Therefore, when 3 mm≤D₁≤7 mm, the electrode assembly 122 has a high structural stability while the battery cell 12 has a high electrolyte injection efficiency. When L₂≥5 mm, the size of the heat-shrinkable film 123 in the third direction Z is large, and the heat-shrinkable film 123 can properly constrain the electrode assembly 122. When L₂≤15 mm, the size of the heat-shrinkable film 123 in the third direction Z is small, and the energy density of the battery cell 12 is high. Therefore, when 5 mm≤L₂≤15 mm holds, the battery cell 12 has a high energy density while the electrode assembly 122 is properly constrained.

According to some embodiments of this application, referring to FIG. 4, FIG. 6, and FIG. 8, 4 mm≤D₁≤6 mm, 8 mm≤L₂≤12 mm.

D₁ may be any value greater than or equal to 4 mm and less than or equal to 6 mm, for example, 4 mm, 4.5 mm, 5 mm, 5.5 mm, or 6 mm.

L₂ may be any value greater than or equal to 8 mm and less than or equal to 12 mm, for example, 8 mm, 8.5 mm, 9 mm, 9.5 mm, 10 mm, 10.5 mm, 11 mm, 11.5 mm, or 12 mm.

In this solution, when D₁≥4 mm, the electrolyte injection efficiency of the battery cell 12 can be further improved. When D₁≤6 mm, the structural stability of the electrode assembly 122 can be further improved. Therefore, when 4 mm≤D₁≤6 mm, the structural stability of the electrode assembly 122 can be further improved while the electrolyte injection efficiency of the battery cell 12 is further improved. When L₂≥8 mm, the constraining effect of the heat-shrinkable film 123 on the electrode assembly 122 can be further improved. When L₂≤12 mm, the energy density of the battery cell 12 can be further improved. Therefore, when 8 mm≤L₂≤12 mm, the energy density of the battery cell 12 can be further improved and the constraining effect of the heat-shrinkable film 123 on the electrode assembly 122 is further improved.

According to some embodiments of this application, referring to FIG. 6 to FIG. 7, the first hole 1234 does not overlap the connecting portion 1233.

The first hole 1234 does not overlap the connecting portion 1233, which means that the connecting portion 1233 does not block the first hole 1234.

In this solution, since the first hole 1234 does not overlap the connecting portion 1233, the connecting portion 1233 does not block the first hole 1234, which helps further improve the electrolyte injection efficiency of the battery cell 12.

According to some embodiments of this application, referring to FIG. 4, FIG. 6, and FIG. 8, a plurality of first holes 1234 are provided, and the plurality of first holes 1234 are arranged at intervals along the first direction X.

When the total area of the holes is constant, compared with a single hole with a large area, a plurality of first holes 1234 are arranged at intervals along the first direction X, which means that there is still heat-shrinkable film 123 between adjacent first holes 1234. The heat-shrinkable film 123 between two adjacent first holes 1234 can still apply a certain constraining force on the electrode assembly 122 after heat shrinkage, which helps improve the shaping effect of the electrode assembly 122.

In this solution, providing a plurality of first holes 1234 can further improve the electrolyte injection efficiency of the battery cell 12.

According to some embodiments of this application, referring to FIG. 4 and FIG. 9, a second hole 1235 is provided on a portion of the heat-shrinkable film 123 covering the second side face 12212b.

The shape of the second hole 1235 may include but is not limited to circle, semicircle, polygon, or the like.

The second hole 1235 may be pre-processed before the heat-shrinkable film 123 covers the electrode assembly 122.

In some embodiments, the connecting portion 1233 is located on the first side face 12212a. A first hole 1234 is provided on a portion of the heat-shrinkable film 123 covering the first side face 12212a. The first hole 1234 does not overlap the connecting portion 1233. A second hole 1235 is provided on a portion of the heat-shrinkable film 123 covering the second side face 12212b. In this embodiment, since the connecting portion 1233 is located on the first side face 12212a, the position of the second hole 1235 arranged on the second side face 12212b does not interfere with the connecting portion 1233, and the area of the second hole 1235 may be set to be larger than the area of the first hole 1234, which helps improve the electrolyte injection efficiency of the battery cell 12.

The second hole 1235 may be arranged in one or multiple rows. Each row may have one or more second holes 1235. In embodiments where a plurality of second holes 1235 are provided, the plurality of second holes 1235 may be arranged linearly, in a wave-shaped pattern, or in an irregular pattern.

The first side face 12212a and the second side face 12212b are oppositely arranged along the second direction Y. The third direction Z is parallel to the laminating direction of the electrode assembly 122. The second direction Y, the first direction X and the third direction Z are perpendicular to each other. This means that there are inter-layer gaps in the second side face 12212b of the electrode assembly 122. During electrolyte injection into the battery cell 12, the electrolyte can not only enter the inside of the electrode assembly 122 from the tab 1222 side, but also enter the inside of the electrode assembly 122 through the second hole 1235 and the inter-layer gaps, which helps improve the electrolyte injection efficiency of the battery cell 12.

In this solution, during electrolyte injection into the battery cell 12, the electrolyte can flow to the inside of the electrode assembly 122 through the second hole 1235. This accelerates the filling of the electrolyte inside the battery cell 12, which helps improve the electrolyte injection efficiency of the battery cell 12 and the wetting effect of the electrolyte on the electrode assembly 122.

According to some embodiments of this application, referring to FIG. 4 and FIG. 9, the diameter of the second hole 1235 is D₂, and in the third direction Z, the size of the heat-shrinkable film 123 is L₂, and 0.3≤D₂/L₂<1 is satisfied.

The diameter of the second hole 1235 can be understood as the diameter of the circumscribed circle of the second hole 1235, that is, the diameter of the second hole 1235 is the diameter of the smallest circle that can surround the second hole 1235.

D₂/L₂ may be any value greater than or equal to 0.3 and less than 1, for example, 0.3, 0.35, 0.4, 0.45, 0.5, 0.55, 0.6, 0.65, 0.7, 0.75, 0.8, 0.85, 0.9, or 0.95.

In this solution, when D₂/L₂≥0.3, the ratio of the diameter of the second hole 1235 to the size of the heat-shrinkable film 123 in the third direction Z is large, and the electrolyte injection efficiency of the battery cell 12 is high. When D₂/L₂<1, the ratio of the diameter of the second hole 1235 to the heat-shrinkable film 123 in the third direction Z is small, the heat-shrinkable film 123 has a high tensile strength, and the electrode assembly 122 has a high structural stability after being constrained by the heat-shrinkable film 123. Therefore, when 0.3≤D₂/L₂<1, the electrode assembly 122 has a high structural stability while the battery cell 12 has a high electrolyte injection efficiency.

According to some embodiments of this application, referring to FIG. 4 and FIG. 9, 3 mm≤D₂<10 mm and 5 mm≤L₂≤15 mm.

D₂ may be any value greater than or equal to 3 mm and less than 10 mm, for example, 3 mm, 3.5 mm, 4 mm, 4.5 mm, 5 mm, 5.5 mm, 6 mm, 6.5 mm, 7 mm, 7.5 mm, 8 mm, 8.5 mm, 9 mm, or 9.5 mm. L₂ may be any value greater than or equal to 5 mm and less than or equal to 15 mm, for example, 5 mm, 5.5 mm, 6 mm, 6.5 mm, 7 mm, 7.5 mm, 8 mm, 8.5 mm, 9 mm, 9.5 mm, 10 mm, 10.5 mm, 11 mm, 11.5 mm, 12 mm, 12.5 mm, 13 mm, 13.5 mm, 14 mm, 14.5 mm, or 15 mm.

In this solution, when D₂≥3mm, the diameter of the second hole 1235 is large, and the electrolyte injection efficiency of the battery cell 12 is high. When D₂<10 mm, the diameter of the second hole 1235 is small, and the structural stability of the electrode assembly 122 is high. Therefore, when 3 mm≤D₂<10 mm, the electrode assembly 122 has a high structural stability while the battery cell 12 has a high electrolyte injection efficiency. When L₂≥5 mm, the size of the heat-shrinkable film 123 in the third direction Z is large, and the heat-shrinkable film 123 can properly constrain the electrode assembly 122. When L₂≤15 mm, the size of the heat-shrinkable film 123 in the third direction Z is small, and the energy density of the battery cell 12 is high. Therefore, when 5 mm≤L₂≤15 mm, the battery cell 12 has a high energy density while the electrode assembly 122 is properly constrained.

According to some embodiments of this application, referring to FIG. 4 and FIG. 8, 4 mm≤D₂≤8 mm and 8 mm≤L₂≤12 mm.

D₂ may be any value greater than or equal to 4 mm and less than 8 mm, for example, 4 mm, 4.5 mm, 5 mm, 5.5 mm, 6 mm, 6.5 mm, 7 mm, 7.5 mm, or 8 mm. L₂ may be any value greater than or equal to 8 mm and less than or equal to 12 mm, for example, 8 mm, 8.5 mm, 9 mm, 9.5 mm, 10 mm, 10.5 mm, 11 mm, 11.5 mm, or 12 mm.

In this solution, when D₂≥4 mm, the electrolyte injection efficiency of the battery cell 12 can be further improved. When D₂≤8 mm, the structural stability of the electrode assembly 122 can be further improved. Therefore, when 4 mm≤D₂≤8 mm, the structural stability of the electrode assembly 122 can be further improved while the electrolyte injection efficiency of the battery cell 12 is further improved. When L₂≥8 mm, the constraining effect of the heat-shrinkable film 123 on the electrode assembly 122 can be further improved. When L₂≤12 mm, the energy density of the battery cell 12 can be further improved. Therefore, when 8 mm≤L₂≤12 mm, the energy density of the battery cell 12 can be further improved and the constraining effect of the heat-shrinkable film 123 on the electrode assembly 122 is further improved.

According to some embodiments of this application, referring to FIG. 4 and FIG. 8, a plurality of second holes 1235 are provided, and the plurality of second holes 1235 are arranged at intervals along the first direction X.

When the total area of the holes is constant, compared with a single hole with a large area, the plurality of second holes 1235 are arranged at intervals along the first direction X, which means that there is still heat-shrinkable film 123 between adjacent second holes 1235. The heat-shrinkable film 123 between two adjacent second holes 1235 can still apply a certain constraining force on the electrode assembly 122 after heat shrinkage, which helps improve the shaping effect of the electrode assembly 122.

In this solution, providing a plurality of second holes 1235 can further improve the electrolyte injection efficiency of the battery cell 12.

According to some embodiments of this application, referring to FIG. 6 and FIG. 7, the battery cell 12 further includes a first adhesive tape 127 and a second adhesive tape 128, and along the circumferential direction of the main body 1221, the first adhesive tape 127 and the second adhesive tape 128 are both arranged around the main body 1221. The heat-shrinkable film 123 has a first end 1236 and a second end 1237 in the first direction X. The first adhesive tape 127 is configured to fix the first end 1236 to the main body 1221. The second adhesive tape 128 is configured to fix the second end 1237 to the main body 1221.

The materials of the first adhesive tape 127 and the second adhesive tape 128 may include polypropylene and the like.

In some embodiments, referring to FIG. 8, after the heat-shrinkable film 123 is wrapped around the circumferential surface 12212 of the main body 1221, in the first direction X, gaps are left between the first end 1236 and the second end 1237 and the edges of the main body 1221 in the first direction X. A part of the first adhesive tape 127 and a part of the second adhesive tape 128 may be bonded to those gaps, and another part may be bonded to the heat-shrinkable film 123 to fix the first end 1236 and the second end 1237.

In this solution, the first adhesive tape 127 and the second adhesive tape 128 respectively fix the first end 1236 and the second end 1237 to the main body 1221, thereby reducing the risk of exposure of the electrode assembly 122 caused by another shrinkage of the heat-shrinkable film 123 in the subsequent drying process. This helps improve the reliability of the battery cell 12.

According to some embodiments of this application, referring to FIG. 6 and FIG. 7, the outer edge of the first adhesive tape 127 is flush with the first end surface 12211a, and the outer edge of the second adhesive tape 128 is flush with the second end surface 12211b.

The outer edge of the first adhesive tape 127 refers to the edge of the first adhesive tape 127 away from the second adhesive tape 128 in the first direction X.

The outer surface of the second adhesive tape 128 refers to the edge of the second adhesive tape 128 away from the first adhesive tape 127 in the first direction X.

In this solution, since the outer edge of the first adhesive tape 127 does not extend beyond the first end surface 12211a and the outer surface of the second adhesive tape 128 does not extend beyond the second end surface 12211b, the first adhesive tape 127 is less likely to shield the first end surface 12211a and the second adhesive tape 128 is less likely to shield the second end surface 12211b. This reduces the risk of deteriorating the electrolyte injection efficiency of the battery cell 12 and wetting effect of the electrode assembly 122.

According to some embodiments of this application, referring to FIG. 4 and FIG. 6, the tab 1222 includes a positive tab 1222a and a negative tab 1222b. The positive tab 1222a and the negative tab 1222b are both arranged on the first end surface 12211a.

The positive tab 1222a and the negative tab 1222b are both arranged on the first end surface 12211a, meaning that inside the battery cell 12, a large assembly space needs to be reserved only on the side corresponding to the first end surface 12211a of the electrode assembly 122.

In this solution, the positive tab 1222a and the negative tab 1222b are located on the same side of the electrode assembly 122, which helps improve the energy density of the battery cell 12 in one direction.

According to some embodiments of this application, this application provides a battery 100, including the battery cell 12 in one or more of the foregoing embodiments.

In this solution, the battery cell 12 in one or more of the foregoing embodiments is manufactured with high manufacturing efficiency and low cost. This means that the battery 100 including the foregoing battery cell 12 can also be manufactured with high manufacturing efficiency and low cost.

According to some embodiments of this application, this application provides an electric device. The electric device includes the battery cell 12 in one or more of the foregoing embodiments, and the battery cell 12 is configured to provide electric energy. Alternatively, the electric device includes the battery 100 in one or more of the foregoing embodiments, and the battery 100 is configured to provide electric energy.

In this solution, the battery cell 12 or the battery 100 in one or more of the foregoing embodiments is manufactured with high manufacturing efficiency and low cost. This means that an electric device including the battery cell 12 or battery 100 can also be manufactured with high manufacturing efficiency and low cost.

According to some embodiments of this application, referring to FIG. 3 to FIG. 7, this application provides a battery cell 12. The battery cell 12 includes a housing 121, an electrode assembly 122, and a heat-shrinkable film 123. The housing 121 has an accommodating space, and the electrode assembly 122 is accommodated in the accommodating space. The electrode assembly 122 is a laminated electrode assembly. The electrode assembly 122 includes a main body 1221 and a tab 1222. The main body 1221 has a first end surface 12211a and a second end surface 12211b oppositely arranged along a first direction X and a circumferential surface 12212 connecting the first end surface 12211a and the second end surface 12211b. The tab 1222 includes a positive tab 1222a and a negative tab 1222b. The positive tab 1222a and the negative tab 1222b are both arranged on the first end surface 12211a.

The heat-shrinkable film 123 is wrapped around the circumferential surface 12212 along the circumferential direction of the main body 1221. The circumferential surface 12212 has a first side face 12212a and a second side face 12212b oppositely arranged along a second direction Y and a third side face 12212c and a fourth side face 12212d oppositely arranged along a third direction Z. The third direction Z is parallel to the laminating direction of the electrode assembly 122. The area of the third side face 12212c is equal to the area of the fourth side face 12212d and is the largest surface of the electrode assembly 122. The second direction Y, the first direction X, and the third direction Z are perpendicular to each other.

The heat-shrinkable film 123 has a leading end 1231 and a trailing end 1232 in the circumferential direction. The leading end 1231 and the trailing end 1232 are bonded by an adhesive to form a connecting portion 1233. The connecting portion 1233 is located on the first side face 12212a. By constraining and shaping the electrode assembly 122 through the principle of heat shrinkage of the heat-shrinkable film 123, the hot pressing process and cold pressing process of the battery cell 12 are omitted, which improves the manufacturing efficiency of the battery cell 12, and reduces the manufacturing cost of the battery cell 12.

A first hole 1234 is provided on a portion of the heat-shrinkable film 123 covering the first side face 12212a. The first hole 1234 does not overlap the connecting portion 1233. A plurality of first holes 1234 are provided, and the plurality of first holes 1234 are arranged at intervals along the first direction X. A second hole 1235 is provided on a portion of the heat-shrinkable film 123 covering the second side face 12212b. A plurality of second holes 1235 are provided, and the plurality of second holes 1235 are arranged at intervals along the first direction X. During electrolyte injection into the battery cell 12, the electrolyte can flow to the inside of the electrode assembly 122 through the first hole 1234 and the second hole 1235. This accelerates the filling of the electrolyte inside the battery cell 12, which helps improve the electrolyte injection efficiency of the battery cell 12 and the wetting effect of the electrolyte on the electrode assembly 122.

The battery cell 12 further includes a first adhesive tape 127 and a second adhesive tape 128, and along the circumferential direction of the main body 1221, the first adhesive tape 127 and the second adhesive tape 128 are both arranged around the main body 1221. The heat-shrinkable film 123 has a first end 1236 and a second end 1237 in the first direction X. The first adhesive tape 127 is configured to fix the first end 1236 to the main body 1221. The second adhesive tape 128 is configured to fix the second end 1237 to the main body 1221. The outer edge of the first adhesive tape 127 is flush with the first end surface 12211a, and the outer edge of the second adhesive tape 128 is flush with the second end surface 12211b. The first adhesive tape 127 and the second adhesive tape 128 can reduce the risk of exposure of the electrode assembly 122 caused by another shrinkage of the heat-shrinkable film 123 in the subsequent drying process. This helps improve the reliability of the battery cell 12.

Finally, it should be noted that the foregoing embodiments are used only to illustrate, rather than to limit, the technical solutions of this application. Although this application has been described in detail with reference to the foregoing embodiments, those skilled in the art will appreciate that various modifications may still be made to the technical solutions described in the foregoing embodiments, or equivalents may be substituted for some or all of the technical features thereof. Such modifications or substitutions do not depart from the scope of the technical solutions of the embodiments of this application, and are intended to be fall within the scope of the claims and the specification of this application. In particular, provided that no structural conflict exists, the technical features described in the various embodiments may be combined with one another in any suitable manner. This application is not limited to the specific embodiments disclosed herein, but encompasses all technical solutions falling within the scope of the claims.

## Claims

1. A battery cell, **characterized by** comprising:
an electrode assembly comprising a main body and a tab, wherein the main body has a first end surface and a second end surface oppositely arranged along a first direction and a circumferential surface connecting the first end surface and the second end surface, and the tab is arranged on the first end surface and/or the second end surface; and
a heat-shrinkable film wrapped around the circumferential surface along a circumferential direction of the main body, wherein the heat-shrinkable film has a leading end and a trailing end in the circumferential direction, and the leading end and the trailing end are connected.

2. The battery cell according to claim 1, **characterized in that** the leading end and the trailing end are bonded by an adhesive.

3. The battery cell according to claim 1 or 2, **characterized in that** in the first direction, the main body has a first edge and a second edge, a first gap is provided between the heat-shrinkable film and the first edge, and a second gap is provided between the heat-shrinkable film and the second edge.

4. The battery cell according to claim 3, **characterized in that** in the first direction, the first gap and the second gap have the same size.

5. The battery cell according to any one of claims 1 to 4, **characterized in that** the electrode assembly is a laminated electrode assembly.

6. The battery cell according to claim 5, **characterized in that** the circumferential surface has a first side face and a second side face oppositely arranged along a second direction and a third side face and a fourth side face oppositely arranged along a third direction, wherein the third direction is parallel to a laminating direction of the electrode assembly, an area of the third side face is larger than an area of the first side face, and the second direction, the first direction, and the third direction are perpendicular to each other; and
the leading end and the trailing end are connected to form a connecting portion, and the connecting portion is located on the first side face.

7. The battery cell according to claim 6, **characterized in that** in the third direction, a size of the connecting portion is L₁, a size of the heat-shrinkable film is L₂, and 0.3≤L₁/L₂≤0.7 is satisfied.

8. The battery cell according to claim 6 or 7, **characterized in that** a first hole is provided on a portion of the heat-shrinkable film covering the first side face.

9. The battery cell according to claim 8, **characterized in that** a diameter of the first hole is D₁, in the third direction, the size of the heat-shrinkable film is L₂, and 0.3≤D₁/L₂≤0.7 is satisfied.

10. The battery cell according to claim 9, **characterized in that** 3 mm≤D₁≤7 mm and 5 mm≤L₂≤15 mm.

11. The battery cell according to claim 10, **characterized in that** 4 mm≤D₁≤6 mm and 8 mm≤L₂≤12 mm.

12. The battery cell according to any one of claims 8 to 11, **characterized in that** the first hole does not overlap the connecting portion.

13. The battery cell according to any one of claims 8 to 12, **characterized in that** a plurality of the first holes are provided, and the plurality of first holes are arranged at intervals along the first direction.

14. The battery cell according to any one of claims 6 to 13, **characterized in that** a second hole is provided on a portion of the heat-shrinkable film covering the second side face.

15. The battery cell according to claim 14, **characterized in that** a diameter of the second hole is D₂, in the third direction, the size of the heat-shrinkable film is L₂, and 0.3≤D₂/L₂<1 is satisfied.

16. The battery cell according to claim 15, **characterized in that** 3 mm≤D₂<10 mm and 5 mm≤L₂≤15 mm.

17. The battery cell according to claim 16, **characterized in that** 4 mm≤D₂≤8 mm and 8 mm≤L₂≤12 mm.

18. The battery cell according to any one of claims 14 to 17, **characterized in that** a plurality of the second holes are provided, and the plurality of second holes are arranged at intervals along the first direction.

19. The battery cell according to any one of claims 1 to 18, **characterized in that** the battery cell further comprises a first adhesive tape and a second adhesive tape, and along the circumferential direction of the main body, the first adhesive tape and the second adhesive tape are both arranged around the main body; and
the heat-shrinkable film has a first end and a second end in the first direction, the first adhesive tape is configured to fix the first end to the main body, and the second adhesive tape is configured to fix the second end to the main body.

20. The battery cell according to claim 19, **characterized in that** in the first direction, an outer edge of the first adhesive tape is flush with the first end surface, and an outer edge of the second adhesive tape is flush with the second end surface.

21. The battery cell according to any one of claims 1 to 20, **characterized in that** the tab comprises a positive tab and a negative tab; wherein
the positive tab and the negative tab are both arranged on the first end surface.

22. A battery, **characterized by** comprising the battery cell according to any one of claims 1 to 21.

23. An electric device, **characterized in that** the electric device comprises the battery cell according to any one of claims 1 to 21, and the battery cell is configured to provide electric energy; or
the electric device comprises the battery according to claim 22, and the battery is configured to provide electric energy.
